# EUROPEAN PATENT SPECIFICATION

(11) **EP 4 545 292 B1**
(45) Date of publication and mention of the grant of the patent: **23.09.2026**
(21) Application number: 23831445.4
(22) Date of filing: 27.06.2023
(51) Int. Cl.: C08L 27/12, C08L 9/02, B32B 15/06, F16J 15/08, B32B 7/12, F02F 11/00

(54) **RUBBER-METAL LAMINATED GASKET MATERIAL**
LAMINIERTES KAUTSCHUK-METALL-DICHTUNGSMATERIAL
MATÉRIAU DE JOINT D'ÉTANCHÉITÉ STRATIFIÉ CAOUTCHOUC/MÉTAL

(30) Priority: 27.06.2022 JP 2022102360
(43) Date of publication of application: 30.04.2025
(73) Proprietor: NOK Corporation, Minato-ku Tokyo 105-8585 (JP)
(72) Inventor: TAKEKAWA Daiki, Fujisawa-shi, Kanagawa 251-0042 (JP)
(74) Representative: Kraus & Lederer PartGmbB
(86) International application number: PCT/JP2023/023762
(87) International publication number: WO 2024/005005

(56) References cited:
- EP-A1- 3 015 746
- JP-A- 2015 007 446
- JP-A- 2016 169 797

## Description

### TECHNICAL FIELD

The present invention relates to a rubber-metal laminated gasket material. More particularly, the present invention relates to a fluororubber-metal laminated gasket material suitable to use for engine cylinder head gaskets, etc.

### BACKGROUND ART

Mild steel and stainless steel are mainly used as metallic materials for engine cylinder head gasket materials for which water resistance, LLC (long life coolant) resistance, and heat resistance are required; however, when a vulcanizing adhesive is directly applied to such a metallic material to bond the material to rubber, liquid resistant adhesion durability is poor. When this rubber-metal laminated plate is subjected to a dipping test in which the plate is dipped in water, LLC, etc., adhesive peeling occurs. Their LLC resistance is poor, and rubber peeling off within the engine may lead to engine failure.

The adhesion between a metal plate and rubber is improved by using method for treating the surface of a stainless steel plate, such as zinc phosphate treatment, iron phosphate treatment. In these methods, a degreased steel plate is dipped in an acidic chemical solution to form an insoluble film on the steel plate, thereby ensuring rust prevention and adhesion to an adhesive. However, these methods had the following problems: sludge (industrial waste) was generated at the stage of forming a film; it was necessary to always supply chemical agents because chemical components were reduced due to the reaction; and the cost was high.

The present applicant has previously proposed improving resistance to water, LLC, etc., by performing coating type chromate treatment on stainless steel plate as a pretreatment before a vulcanizing adhesive is applied (Patent Documents 1 and 2). However, the coating type chromate treatment, which includes Cr⁶⁺ ions, is not preferable in terms of environmental protection.

Moreover, as a method that does not use zinc phosphate, iron phosphate, chromium, etc., a surface treating agent containing an organic resin, silica, and titanium and zirconia derived from fluoride has proposed. However, since this surface treating agent contains fluorine, defluoridation of wastewater is necessary, thus requiring complex facilities (Patent Document 3).

In contrast, a fluorine-free treating agent as a modified version of the above surface treating agent has proposed. However, sufficient adhesion cannot be obtained in severe use environments such as for cylinder head gasket etc., which is exposed to high temperature LLC vapor (Patent Document 4).

To address this problem, the present applicant has previously proposed, in Patent Document 5, a rubber-metal laminated gasket material comprising a metal plate, a surface treating agent layer, an adhesive layer, and a rubber layer, the layers being sequentially laminated on the metal plate; wherein the surface treating agent layer is formed by applying a surface treating agent so that the coating amount on one surface is 30 to 1,000 mg/m², and the surface treating agent is free from chromium, has a mixing ratio of 20 to 90 wt.% of a fluorine-free titanium compound and 10 to 80 wt.% of alumina, and has a metal titanium content of 1 to 20 wt.%, and a rubber-metal laminated gasket material that is free from chromium and fluorine, and that has excellent LLC resistance under high temperature conditions. Further, the present applicant has also proposed, in Patent Documents 6 and 7 etc., combining an organic metal compound containing a chelate structure with an inorganic filler, such as alumina or silica, as a primer for rubber-metal laminated gaskets. However, further improvement is required for LLC resistance under high temperature conditions over a long period of time.

### PRIOR ART DOCUMENTS

### PATENT DOCUMENTS

Patent Document 1 : JP-A-2000-006307
Patent Document 2 : JP-A-11-221875
Patent Document 3 : JP-B-5050316
Patent Document 4 : WO 2011/002040
Patent Document 5 : WO 2014/208113
Patent Document 6 : JP-A-2005-180682
Patent Document 7 : JP-A-2006-218629
Patent Document 8 : JP-A-7-165953
Patent Document 9: EP 3 015 746 A1

### OUTLINE OF THE INVENTION

### PROBLEM TO BE SOLVED BY THE INVENTION

The present invention was made in view of the problems described above, and an object thereof is to provide a rubber-metal laminated gasket material that has excellent LLC resistance under high temperature conditions.

### MEANS FOR SOLVING THE PROBLEM

The object of the present invention can be attained by a rubber-metal laminated gasket material comprising a metal plate, a surface treating agent layer, an adhesive layer, and a rubber layer, the layers being sequentially laminated on the metal plate; wherein the surface treating agent layer is formed by using a surface treating agent comprising an organic titanium compound and titanium coupling agent-treated alumina, wherein the element mass ratio of titanium and aluminum in a surface treating agent film is 5:95 to 60:40.

### EFFECT OF THE INVENTION

The rubber-metal laminated gasket material of the present invention is exhibits the following effects. For example, adhesion peeling does not occur in a heat resistance test method in LLC in consideration of the actual use environment of engine cylinder head gaskets, and excellent LLC resistance is exhibited even under high temperature conditions, such as 150°C for about 300 hours. Specifically, in the combination of an organic metal compound and an inorganic filler, the surface of alumina is treated with a coupling agent, thereby improving the LLC resistance of the primer. The improved LLC adhesion resistance eliminates rubber peeling of the gasket within the engine, leading to an improvement in defects.

Further, since the surface treating agent neither contains chromium nor fluorine, it is preferable from an environmental perspective, and due to the use of a fluorine-free surface treating agent, there is no need to remove fluorine from wastewater. Moreover, surface treatment is performed by simply applying a prepared chemical agent to form a film, rather than by forming a film by a chemical reaction with a stainless steel plate, as in zinc phosphate treatment; thus, this contributes to an excellent effect that no sludge is formed.

### BRIEF DESCRIPTION OF DRAWINGS

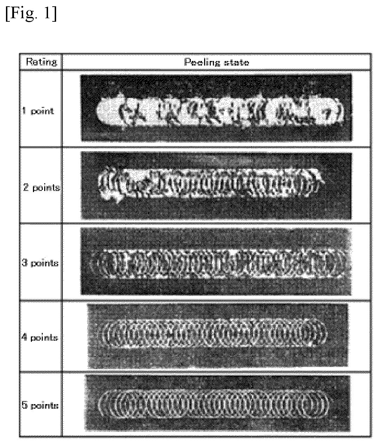

Fig. 1: A figure showing the rating of the peeling state after a drawing test performed in the Examples and Comparative Examples

### EMBODIMENTS FOR CARRYING OUT THE INVENTION

As the metal plate, mild steel plate, a stainless steel plate, aluminum plate, aluminum die cast plate, or the like is used. Examples of stainless steel plates include SUS301, SUS301H, SUS304, SUS430, and the like. For gasket applications, the plate having thickness of about 0.1 to 2 mm is generally used. A surface treating agent containing an organic titanium compound and alumina surface treated with a titanium coupling agent is applied onto these metal plates. In this case, the metal plate is preferably used after surface roughening and alkaline degreasing.

As the surface-treating agent, the element mass ratio of titanium and aluminum in the film of the surface-treating agent is 5:95 to 60:40, preferably 6:94 to 30:70 is used. When the element mass ratio is other than this, after dipped in LLC at 150°C for 300 hours, peeling occurs in the LLC vapor exposed portion, as shown in a Comparative Examples described later.

Examples of the organic titanium compound include alkoxy titanium, titanium acylate, and titanium chelate, etc. which have a Ti-O-C bond formed from Ti(IV) or Ti(III) and a compound having an alcoholic hydroxyl group, a phenolic hydroxyl group, or a carboxyl group. Usable examples include tetraisopropyl titanate, tetra-n-butyl titanate, butyl titanate dimer, tetraoctyl titanate, and organic titanium compounds composed of a chelate ring and an alkoxy group represented by the general formulas: 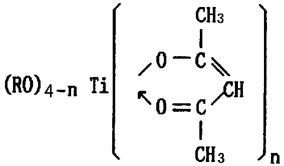 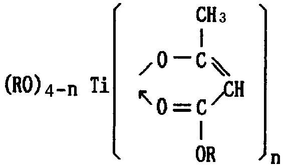
- R :: a lower alkyl group having 1-5 carbon atoms such as CH₃, C₂H₅, n-C₃H₇, i-C₃H₇, n-C₄H₉, i-C₄H₉
- n :: an integer of 1 to 4.
Specifically, an organic titanium compound, such as isopropoxytitanium bis(ethylacetoacetate), 1,3-propanedioxytitanium bis(ethylacetoacetate), diisopropoxytitanium bis(acetylacetonate), titanium tetra(acetylacetonate) is used. For these compounds, commercially available products, such as tetra-n-butyl titanate produced by Mitsubishi Gas Chemical Company, Inc, and Orgatics TA-10, Orgatics TA-21, Orgatics TA-23, Orgatics TA-30, Orgatics TC-100, produced by Matsumoto Fine Chemical Co. Ltd. can be used as they are.

As the alumina surface treated with a titanium coupling agent, one obtained by treating the surface of alumina with a titanium coupling agent is used. In practice, commercially available products, such as TC-500 (titanium diethanolaminate) produced by Matsumoto Fine Chemical Co., Ltd., can be used as it is. The particle size of alumina used is not particularly limited. Performing such surface treatment can reduce the number of functional groups on the alumina surface, suppress the reaction between the alumina and the organic metal compound, and increase the reaction points between the organic metal compound and the metal steel plate. If alumina without surface treatment is used, the functional groups on the alumina surface react with the organic metal compound and interfere with the adhesion between the organic metal compound and the stainless steel plate. On the other hand, if alumina is not used, the liquid shielding properties of the primer is reduced, and a potential is generated between the engine block/head, which is made of aluminum, and the stainless steel plate of CHG upon contact with water or LLC, promoting peeling.

The surface treating agent comprising the above components as essential components and prepared by mixing them and dissolving or dispersing the mixture in a solvent is applied to both surfaces of a metal plate by dipping, spraying, brush coating, roll coating, or the like so that the coating amount (coating weight) on one surface is 30 to 2500 mg/m², preferably 500 to 1500 mg/m², and then dried at room temperature or by hot air, followed by calcination at 100 to 250°C for 1 to 20 minutes. When the coating amount is greater than this range, peeling occurs in the portion dipped in LLC liquid. In contrast, when the coating amount is less than this range, the adhesion between the metal and rubber is reduced. The solvent for dissolving or dispersing the organic titanium compound and titanium coupling-treated alumina is not particularly limited; however, for example, methanol is used.

To the layer of the surface treating agent applied to the metal plate and dried, a resin-based vulcanizing adhesive, such as a thermosetting phenolic resin, or an epoxy resin, is applied as an adhesive for rubber. As the thermosetting phenolic resin, any thermosetting phenolic resin, such as cresol novolac type phenolic resin, cresol resol type phenolic resin, or alkyl-modified phenolic resin can be used. Moreover, as the epoxy resin, a cresol novolac type epoxy resin is preferably used. In this case, a bisphenol novolac type phenolic resin is used as a curing agent, and an imidazole compound is used as a curing catalyst. For example, an epoxy resin-based vulcanizing adhesive in which an epoxy resin and an imidazole curing agent are mixed at a ratio of 9.5:0.5 to 7:3 is used.

Such a resin-based vulcanizing adhesive is generally prepared as an organic solvent solution having a component concentration of about 1 to 5 wt.% using an alcohol-based organic solvent, such as methanol, ethanol, isopropanol, or a ketone-based organic solvent, such as acetone, methyl ethyl ketone, methyl isobutyl ketone, singly or as a mixed solvent thereof. The vulcanizing adhesive is applied by the same coating method as for the surface treating agent so that the coating weight (coating amount) on one surface is 100 to 2,500 mg/m², and dried at room temperature or by hot air, followed by calcination at 100 to 250°C for 1 to 20 minutes.

To the thus-formed vulcanizing adhesive layer, an unvulcanized rubber compound is applied, as an organic solvent solution of the rubber compound, and form on both sides vulcanizate layers having a coating film thickness on each side of about 5 to 120 µm. The preparation of the rubber compound is performed by kneading the components using a kneading machine, such as an Intermix, kneader, or Banbury mixer, or using an open roll. The rubber compound is prepared as a rubber paste-based coating liquid so that the solid matters content is about 20 to 50 wt.%. As the rubber, a fluororubber, a nitrilerubber, or the like is used, and a fluororubber preferably is preferably used.

As the fluororubber , either polyol-vulcanizable or peroxide-vulcanizable fluororubber can be used.

Polyol-vulcanizable fluororubber generally includes copolymers of vinylidene fluoride with at least one of other fluorine-containing olefins such as hexafluoropropene, pentafluoropropene, tetrafluoroethylene, trifluorochloroethylene, vinyl fluoride, perfluoro(methyl vinyl ether), perfluoro(ethyl vinyl ether), perfluoro(propyl vinyl ether), etc. or copolymers of the fluorine-containing olefin with propylene, or the like, and can be polyol-vulcanized with a polyhydroxyaromatic compound such as 2,2-bis(4-hydroxyphenyl)propane, 2,2-bis(4-hydroxyphenyl)perfluoropropane, hydroquinone, etc.

Peroxide-vulcanizable fluororubber includes, for example, fluororubbers containing iodine and/or bromine in the molecule, and can be vulcanized (cross-linked) with an organic peroxide that is generally used in the peroxide vulcanization. In this case, it is preferable to use an organic peroxide together with a polyfunctional unsaturated compound, typically triallyl isocyanurate.

Formulation examples of the unvulcanized fluororubber compound, are shown below.

### (Formulation Example I)

| | |
|---|---|
| Polyol-vulcanizable fluororubber (Viton A500, produced by DuPont) | 100 Parts by weight |
| MT carbon black | 60 Parts by weight |
| Silica (NIPSIL LP, produced by Tosoh Silica Corporation) | 5 Parts by weight |
| Calcium hydroxide (CALDIC2000, produced by Ohmi Chemical Industry Co., Ltd.) | 2 Parts by weight |
| Magnesium oxide (Kyowamag 150, produced by Kyowa Chemical Industry Co., Ltd.) | 5 Parts by weight |
| Processing aid (TE-58A, produced by Technical Processing Inc) | 0.5 parts by weight |
| Vulcanizing agent (Curative #30, produced by DuPont) | 8 Parts by weight |
| Vulcanization accelerator (Curative #20, produced by DuPont) | 4 Parts by weight |

### (Formulation Example II)

| | |
|---|---|
| Polyol-vulcanizable fluororubber (Viton E45, produced by DuPont) | 100 Parts by weight |
| Calcium metasilicate | 40 Parts by weight |
| MT carbon black | 20 Parts by weight |
| Magnesium oxide (Magnesia #150, produced by Kyowa Chemical Co.) | 6 Parts by weight |
| Calcium hydroxide | 3 Parts by weight |
| Vulcanizing agent (Curative #30) | 2 Parts by weight |
| Vulcanization accelerator (Curative #20) | 1 Part by weight |

### (Formulation Example III)

| | |
|---|---|
| Polyol-vulcanizable fluororubber (Viton E60C, produced by DuPont) | 100 Parts by weight |
| Vulcanizing agent (Diak No. 3, produced by DuPont) | 3 Parts by weight |
| Magnesium oxide (Magnesia #30, produced by Kyowa Chemical Co.) | 10 Parts by weight |
| MT carbon black | 30 Parts by weight |

### (Formulation Example IV)

| | |
|---|---|
| Peroxide-crosslinkable fluororubber (Daiel G901, produced by Daikin Industries, Ltd.) | 100 Parts by weight |
| Calcium metasilicate | 20 Parts by weight |
| MT carbon black | 20 Parts by weight |

| | |
|---|---|
| Magnesium oxide (Magnesia #150) | 6 Parts by weight |
| Calcium hydroxide | 3 Parts by weight |
| Triallyl isocyanurate | 1.8 Parts by weight |
| Organic peroxide (Perhexa 25B, produced by NOF Corporation) | 0.8 Parts by weight |

Moreover, the nitrile rubber (NBR) can be used as a compound using a sulfur-based vulcanizing agent, such as sulfur, tetramethylthiurammonosulfide, or tetramethylthiuramdisulfide; however, the nitrile rubber is preferably used as an unvulcanized nitrile rubber compound using an organic peroxide as a crosslinking agent. Formulation examples of such peroxide-crosslinkable unvulcanized nitrile rubber compounds are show below.

### (Formulation Example V)

| | |
|---|---|
| NBR (N-235S, produced by JSR Corporation) | 100 Parts by weight |
| SRF carbon black | 80 Parts by weight |
| Calcium carbonate | 80 Parts by weight |
| Silica powder | 20 Parts by weight |
| Zinc oxide | 5 Parts by weight |
| Antioxidant (Nocrac 224, produced by Ouchi Shinko Chemical Industrial Co., Ltd.) | 2 Parts by weight |
| Triallyl isocyanurate | 2 Parts by weight |
| 1,3-bis(tert-butylperoxy)isopropyl benzene | 2.5 Parts by weight |
| Plasticizers (Vulkanol OT, produced by Bayer) | 5 Parts by weight |

### (Formulation Example VI)

| | |
|---|---|
| NBR (N-237, middle-high nitrile, produced by JSR Corporation) | 100 Parts by weight |
| HAF carbon black | 80 Parts by weight |
| Silica powder | 60 Parts by weight |
| Zinc oxide | 5 Parts by weight |
| Stearic acid | 1 Part by weight |
| Antioxidant (ODA-NS produced by Ouchi Shinko Chemical Industrial Co., Ltd.) | 1 Part by weight |
| Organic peroxide (Perhexa 25B) | 6 Parts by weight |
| N,N-m-phenylenedimaleimide | 1 Part by weight |

The coated unvulcanized rubber layers are dried at room temperature to about 100°C for about 1 to 15 minutes to evaporate off alcohols such as methanol, ethanol, etc., ketones such as methyl ethyl ketone, methyl isobutyl ketone, etc., aromatic hydrocarbons such as toluene, xylene, etc., or a mixture thereof, used as an organic solvent, followed by vulcanization by heating at about 150 to 230°C for about 0.5 to 30 minutes. On this occasion, the vulcanization is performed while pressurizing, if necessary. The vulcanized rubber layers desirably have a hardness (Durometer A) of 80 or more, and a compression set (100°C for 22 hours) of 50% or less from the viewpoint of use as gasket, without any particular limitation by formulation contents so long as satisfy the desired properties. Further, in case sticking prevention is required, an anti-sticking agent can be applied to the surfaces.

The anti-sticking agent is used to prevent sticking between rubbers themselves or between the rubber and the metal. Any anti-sticking agent can be used, so far as it can form a film layer on the vulcanized fluororubber layers, and includes, for example, silicone series, fluorine series, graphite series, wax series such as amides, paraffins, etc., polyolefin series, or polybutadiene series, and preferably an anti-sticking agent comprising a dispersion in an organic solvent of hydroxyl group-containing liquid 1,2-polybutadiene, isocyanate group-containing 1,2-polybutadiene, and polyolefin-based resin, for example, a rubber paste coating liquid in which wax and graphite are dispersed at a ratio of 9:1 to 5:5 is used (Patent Document 8).

### EXAMPLES

Next, the present invention will be described in detail with reference to Examples. The present invention, including its effects, is not limited to the Examples.

### Example 1

To an alkaline-degreased SUS301 stainless steel plate (thickness: 0.2 mm), using titanium acetylacetonate (Orgatix TC-100, produced by Matsumoto Fine Chemical Co., Ltd.; (i-C₃H₇O)₂Ti(C₆H₉O₃)₂) and titanium coupling agent-treated alumina (Orgatix TC-500, produced by Matsumoto Fine Chemical Co., Ltd.), a surface treating agent, in which the element mass ratios of Ti and Al in the surface treating agent film were adjusted to be 8 wt.% and 92 wt.%, respectively, was applied so that the coating weight on one surface was 700 mg/m², followed by calcination at 200°C for 10 minutes to form a primer layer.

To the steel plate coated with the surface treating agent, an epoxy resin-based vulcanizing adhesive in which an epoxy resin (YDCN-700-7, produced by Nippon Steel Chemical & Material Co., Ltd.) and an imidazole curing agent (Curezol 2E4MZ-CN, produced by Shikoku Kasei Holdings Corporation) were mixed at a ratio of 8:2 was applied so that the film amount was 300 mg/m², and air dried, followed by calcination at 200°C for 5 minutes.

A 25 wt.% methyl isobutyl ketone-methanol (weight ratio 8:2) mixed solvent solution of the fluororubber compound of Formulation Example I described above was applied to the vulcanizing adhesive-coated steel plate and dried at 60°C for 15 minutes to form an unvulcanized rubber layer with a thickness of 20 µm on one side, followed by vulcanization at 200°C for 5 minutes. Further, a rubber paste coating liquid in which wax (4202E, produced by Mitsui Chemicals, Inc.) and graphite (AT-No. 40, produced by Oriental Sangyo Co., Ltd.) were dispersed at a ratio of 8:2 was applied, followed by calcination at 200°C for 5 minutes to form an anti-sticking layer, thereby producing a fluororubber-metal laminated gasket material.

### Example 2

In Example 1, titanium acetylacetonate and titanium coupling agent-treated alumina were used, in which the element mass ratio of Ti and Al in the surface treating agent film were adjusted to 23 wt.% and 77 wt.%, respectively.

### Example 3

In Example 1, titanium acetylacetonate and titanium coupling agent-treated alumina were used, in which the element mass ratio of Ti and Al in the surface treating agent film were adjusted to 46 wt.% and 54 wt.%, respectively.

### Example 4

In Example 1, tetraoctyl titanate (Orgatix TA-30, produced by Matsumoto Fine Chemical Co., Ltd.; Ti[OCH₂CH(C₂H₅)C₄H₉]₄) was used in place of the titanium acetylacetonate, and tetraoctyl titanate and titanium coupling agent-treated alumina were used, in which the element mass ratio of Ti and Al in the surface treating agent film were adjusted to 33 wt.% and 67 wt.%, respectively.

### Comparative Example 1

In Example 1, untreated alumina (ASFP-20, produced by Denka Co., Ltd.) was used in place of the titanium coupling agent-treated alumina, and titanium acetylacetonate and alumina were used, in which the element mass ratio of Ti and Al in the surface treating agent film were adjusted to 17 wt.% and 83 wt.%, respectively.

### Comparative Example 2

In Example 1, titanium acetylacetonate and titanium coupling agent-treated alumina were used, in which the element mass ratio of Ti and Al in the surface treating agent film were adjusted to 72 wt.% and 28 wt.%, respectively.

### Comparative Example 3

In Example 1, titanium acetylacetonate was not used, and titanium coupling agent-treated alumina was used, in which the element mass ratio of Al in the surface treating agent film was 100 wt.%.

### Comparative Example 4

In Example 1, silane coupling agent (Z6011, produced by Dow Corning Toray Co., Ltd.) was used in place of the titanium acetylacetonate, and silane coupling agent and titanium coupling agent-treated alumina were used, in which the element mass ratio of Si and Al in the surface treating agent film were adjusted to 25 wt.% and 65 wt.%, respectively.

The rubber-metal laminated gasket materials obtained in each of the above Examples and Comparative Examples were evaluated for adhesion under high temperature LLC conditions.

Adhesion evaluation: A vertical lower half portion of the rubber-metal laminated gasket material was dipped in a dipping liquid [volume ratio of LLC (long life coolant produced by Toyota Motor Corporation) to water = 50:50] and left at 150°C for 300 hours in a pressure resistant container. The lower dipped portion dipped in the dipping liquid and the upper exposed portion (undipped portion) exposed to LLC vapor above the dipping liquid were evaluated by a drawing test according to JIS K6894 as shown in Fig. 1.
A score of 4 or more was considered acceptable.

Following table shows the results obtained.

**Table**

| Material part | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|
| LLC dipped portion | 5 | 5 | 5 | 5 | 5 | 5 | 5 | 5 |
| LLC vapor exposed portion | 5 | 5 | 5 | 5 | 1 | 1 | 1 | 1 |

The above results indicate the following.
(1) In each Example, a rubber-metal laminated gasket material with excellent LLC resistance under high temperature conditions was obtained.
(2) When using surface treatment agents containing an organic titanium compound and titanium coupling agent-treated alumina in amounts outside the specified range, the adhesion was low in the upper exposed portion (undipped portion) exposed to LLC vapor above the dipping liquid, and the materials could not be used in the actual use environment of engine cylinder head gaskets (Comparative Examples 1 and 2).
(3) When using alumina that was not surface treated with a titanium coupling agent, the functional groups on the alumina surface react with the organic metal compound and interfere with the adhesion between the organic metal compound and the stainless steel plate. Therefore, the adhesion is low in the upper exposed portion (undipped portion) exposed to LLC vapor above the dipping liquid (Comparative Example 3).

### INDUSTRIAL APPLICABILITY

The rubber-metal laminated gasket material of the present invention has excellent LLC resistance at a high temperature conditions, and can therefore be effectively used as an engine cylinder head gasket, etc.

## Claims

1. A rubber-metal laminated gasket material comprising a metal plate, a surface treating agent layer, an adhesive layer, and a rubber layer, the layers being sequentially laminated on the metal plate; wherein the surface treating agent layer is formed by using a surface treating agent comprising an organic titanium compound and titanium coupling agent-treated alumina, wherein the element mass ratio of titanium and aluminum in a surface treating agent film is 5:95 to 60:40.

2. The rubber-metal laminated gasket material according to claim 1, wherein the organic titanium compound is alkoxy titanium or titanium chelate.

3. The rubber-metal laminated gasket material according to claim 1, wherein the organic titanium compound is tetraoctyl titanate or titanium acetylacetonate.

4. The rubber-metal laminated gasket material according to claim 1, wherein the adhesive is epoxy resin-based adhesive.

5. The rubber-metal laminated gasket material according to claim 1, wherein the rubber is fluororubber.

6. The rubber-metal laminated gasket material according to claim 1, wherein an anti-sticking agent layer is further provided on the fluororubber layer.

7. The rubber-metal laminated gasket material according to claim 1, which is used as an engine cylinder head gaskets.

8. A engine cylinder head gasket prepared from a rubber-metal laminated gasket material according to claim 7.

## Patentansprüche

1. Gummi-Metall-Laminat-Dichtungsmaterial, umfassend eine Metallplatte, eine Oberflächenbehandlungsmittelschicht, eine Klebstoffschicht und eine Gummischicht, wobei die Schichten nacheinander auf die Metallplatte laminiert sind; wobei die Oberflächenbehandlungsmittelschicht unter Verwendung eines Oberflächenbehandlungsmittels gebildet wird, das eine Organotitanverbindung und mit Titan-Haftvermittler behandeltes Aluminiumoxid umfasst, wobei das Elementmassenverhältnis von Titan und Aluminium in einem Oberflächenbehandlungsmittelfilm 5:95 bis 60:40 beträgt.

2. Gummi-Metall-Laminat-Dichtungsmaterial nach Anspruch 1, wobei die Organotitanverbindung Alkoxytitan oder Titanchelat ist.

3. Gummi-Metall-Laminat-Dichtungsmaterial nach Anspruch 1, wobei die Organotitanverbindung Tetraoctyltitanat oder Titanacetylacetonat ist.

4. Gummi-Metall-Laminat-Dichtungsmaterial nach Anspruch 1, wobei der Klebstoff ein Klebstoff auf Epoxidharzbasis ist.

5. Gummi-Metall-Laminat-Dichtungsmaterial nach Anspruch 1, wobei der Gummi Fluorkautschuk ist.

6. Gummi-Metall-Laminat-Dichtungsmaterial nach Anspruch 1, wobei ferner eine Antihaftmittelschicht auf der Fluorkautschukschicht vorgesehen ist.

7. Gummi-Metall-Laminat-Dichtungsmaterial nach Anspruch 1, das als Zylinderkopfdichtung für Motoren verwendet wird.

8. Zylinderkopfdichtung für Motoren, hergestellt aus einem Gummi-Metall-Laminat-Dichtungsmaterial nach Anspruch 7.

## Revendications

1. Matériau de joint stratifié caoutchouc-métal comprenant une plaque métallique, une couche d'agent de traitement de surface, une couche adhésive et une couche de caoutchouc, les couches étant stratifiées séquentiellement sur la plaque métallique ; dans lequel la couche d'agent de traitement de surface est formée en utilisant un agent de traitement de surface comprenant un composé organique de titane et de l'alumine traitée par un agent de couplage au titane, dans lequel le rapport massique élémentaire du titane et de l'aluminium dans un film d'agent de traitement de surface est de 5:95 à 60:40.

2. Matériau de joint stratifié caoutchouc-métal selon la revendication 1, dans lequel le composé organique de titane est un alcoxyde de titane ou un chélate de titane.

3. Matériau de joint stratifié caoutchouc-métal selon la revendication 1, dans lequel le composé organique de titane est le titanate de tétraoctyle ou l'acétylacétonate de titane.

4. Matériau de joint stratifié caoutchouc-métal selon la revendication 1, dans lequel l'adhésif est un adhésif à base de résine époxy.

5. Matériau de joint stratifié caoutchouc-métal selon la revendication 1, dans lequel le caoutchouc est du caoutchouc fluoré.

6. Matériau de joint stratifié caoutchouc-métal selon la revendication 1, dans lequel une couche d'agent antiadhésif est en outre prévue sur la couche de caoutchouc fluoré.

7. Matériau de joint stratifié caoutchouc-métal selon la revendication 1, qui est utilisé comme joint de culasse de moteur.

8. Joint de culasse de moteur préparé à partir d'un matériau de joint stratifié caoutchouc-métal selon la revendication 7.
